(19) **Europäisches Patentamt**

**European Patent Office**

**Office européen des brevets**

(11) **EP 0 887 816 B1**

(12) **EUROPEAN PATENT SPECIFICATION**

(45) Date of publication and mention
of the grant of the patent:
**28.04.2004   Bulletin 2004/18**

(51) Int Cl.⁷: **H01F 38/08**

(21) Application number: **98114664.0**

(22) Date of filing: **03.05.1996**

(54) **Quarter wave resonant amplifier and method of pumping**

Lambda-Viertel Resonanzverstärker und Verfahren zur Anregung

Amplificateur à circuits accordés à quart d'onde et méthode de pompage

(84) Designated Contracting States:
**DE FR**

(30) Priority:  **03.05.1996  WOPCT/US96/06308**

(43) Date of publication of application:
**30.12.1998   Bulletin 1998/53**

(62) Document number(s) of the earlier application(s) in
accordance with Art. 76 EPC:
**96913932.8 / 0 826 226**

(73) Proprietor: **Diaz, Rodolfo, E.**
**Phoenix, AZ 94806 (US)**

(72) Inventor: **Diaz, Rodolfo, E.**
**Phoenix, AZ 94806 (US)**

(74) Representative: **Morgan, James G. et al**
**Manitz, Finsterwald & Partner GbR**
**Postfach 31 02 20**
**80102 München (DE)**

(56) References cited:
**US-A- 3 285 179          US-A- 4 392 786**

## Description

The present invention relates to a resonant amplifier for the intensity of a magnetic field and to a method of pumping a conducting fluid using a resonant amplifier for the intensity of a magnetic field. The invention has particular relevance to a method and apparatus for the propulsion of objects using electromagnetic fields.

The movement of objects through the influence of electromagnetic fields is a widespread engineering practice with many advantages over mechanical alternatives. One application of this practice is the electromagnetic levitation of metals for crucibleless processing. In this application a body of metal is suspended in space by the induced eddy current repulsion between the metal and a suitably shaped alternating magnetic field. Melting is induced by making the eddy currents intense enough or through the application of an additional RF field. The molten metal is then processed and separated while it is suspended in space, thus never coming in contact with a crucible. Very pure, uncontaminated metal products are obtained this way.

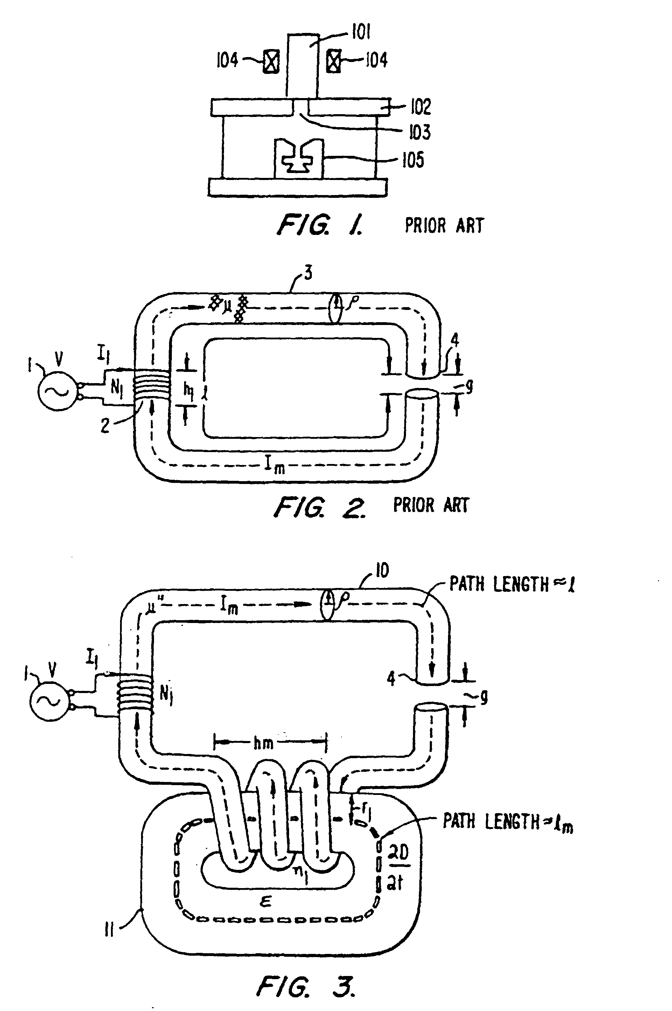

A specific electromagnetic levitation melt system designed to combine the melting, melt treatment, and pouring procedures into a single operation was developed at the University of Alabama and described in Levitation-Melting Method Intrigues Investment Casters (March 1991) Advanced Materials and Processes, 42-45. As shown schematically in Fig. 1 a metal 101, which is to be processed, initially rests an top of a base plate 102 which has a hole 103 in its center, the hole's diameter being slightly smaller than that of the metal billet. When Power is supplied to a set of induction coils 104, a current is inducted in metal 101 causing it to begin to heat up and gradually melt, melting from top to bottom. The electromagnetic force field created by the, interaction of the induced current and its associated magnetic field has a rotational component which stirs the melt. The irrotational component of the field pushes against the outside surface of the melt. When the center of the bottom of the billet melts, the liquid metal drops through hole 103 into a mold 105.

A second type of related application is electromagnetic pumping, where a conducting fluid is propelled along a channel through the interaction of induced currents and static or alternating magnetic fields. An overview of such propulsion systems is given by D.L. Mitchell et al. in an article entitled Induction-Drive Magnetohydrodynamic (MHD) Propulsion in Journal of Superconductivity, 6 (4) (1993) 227- 235. The authors describe the early research in applying MHD propulsion systems to seagoing vessels during the 1960's through the current research using high field superconducting magnet technology.

U.S. Patent No. 4,392,786 discloses a specific electromagnetic pump. The disclosed pump has an open magnetic circuit with an excitation winding connected to an AC source. Within the air gap of the circuit is a duct carrying an electrically conductive fluid. Included in the pump is a means for making electrical contact with the conductive fluid. A third type of application is known as Maglev. Entire transport vehicles (e.g., trains) can be suspended over guiding rails to yield a nearly frictionless high speed mode of transport. A fourth class of applications involve the sudden exchange of energy from an electromagnetic form to a kinetic form or vice versa. The former is the foundation of rail-gun kinetic energy weapons. The latter is the preferred approach for the production of MegaGauss fields in small regions through explosive flux compression.

The most general force law at work in the above applications is the Lorentz force between a current and a magnetic field: $F = \int \bar{I} \times \bar{B} \, d1$. The efficiency of such a force for accomplishing the propulsion of matter is then in general proportional to the square of the magnetic field. This is clear when the current I is induced by the magnetic field B itself. Since the power wasted is proportional to the Joule heating of the conducting material, even when the current is supplied by a separate source it is more' advantageous to have a high B-field, low current system than a low B-field, high current system. Then for a constant force F, since the power lost goes as $I^2R = [F/(B1)]^2R$, the advantage also goes as the square of the magnetic field. For this reason it is desirable to generate the strongest magnetic fields possible. At present, the most efficient magnetic field generation systems utilize superconductors capable of sustaining thousands of Amperes with negligible loss. Their main disadvantages are the requirement for cryogenic cooling and the eventual limitation that high field strengths place on the superconducting state. The alternative of using conventional conductors is viewed as impractical because the high currents required to produce a strong magnetic field in a given region of space would eventually melt the conductors.

From the foregoing, it is apparent that a method by which the magnetic field produced by an electric current can be multiplied in amplitude to the desired strength so that high field strengths can be produced by current carrying conductors with minimized joule heating of the conductors is desired.

In order to satisfy this object there is provided a resonant amplifier for the intensity of a magnetic field comprising:

a source of an input AC magnetomotive force with a frequency $\omega/2\pi$,
a magnetic coaxial transmission line comprising an outer cylinder made of a first lossy permeable material, as defined by the magnitude of the imaginary part of the complex magnetic permeability related to the permeability of free space $\mu_0$ having regard to the operating frequency, and an inner cylinder made of a second lossy permeable material, as defined by the magnitude of the imaginary part of the complex magnetic permeability related to the permeability of free space $\mu_0$ having regard to the operating frequency, said coaxial transmission line having a first end and a second end, wherein the imaginary part of the complex magnetic permeabilities of the outer cylinder and of the inner cylinder are sufficiently great at the operating frequency to cause said inner cylinder to behave as a magnetic equivalent to a metallic conductor;
an end plate sealably coupled to said first end, said end plate made of a third lossy permeable material, as defined by the magnitude of the imaginary part of the complex magnetic permeability related to the permeability of free space $\mu_0$ having regard to the operating frequency, wherein said end plate shorts said coaxial transmission line;
a barrier sealably coupled to an inner wall of said outer cylinder and sealably coupled to an outer wall of said inner cylinder, said carrier located approximately a quarter wave ($\lambda$/4) away from said first end plate where $\lambda = 2\pi c/\omega$, $\omega/2\pi$ being the frequency of the applied input magnetomotive force and c being a speed of light, and wherein said barrier is substantially transparent to electromagnetic waves within said resonant amplifier;
a dielectric filler located between said outer and inner cylinders and between said end plate and said barrier, said dielectric filler having a high dielectric permittivity of the order of 200;
a conducting fluid located between said outer and inner cylinders and between said barrier and said second end.

Also there is provided a method of the initially named kind and comprising applying a magnetomotive force to said dielectric filler located between said outer cylinder made of a first lossy permeable material and said coaxial inner cylinder made of a second lossy permeable material, said dielectric filler also being located between said shorting plate sealably coupled to said first end of said outer and inner cylinders and said barrier plate, said barrier plate being located approximately a quarter wave away from said shorting end plate, wherein said conducting fluid located between said outer and inner cylinders and between said barrier plate and a second end of said outer and inner cylinders is subjected to a force at an open mouth of a waveguide formed at said second end of said outer and inner cylinders.

The present invention applies the well known principle of voltage amplification in electric LRC circuits to magnetic $L_m R_m C_m$ circuits, thereby providing an apparatus and a method for the amplification of magnetic fields. One advantage of the present invention is that it reduces the current loads on the metallic conductors within an electromagnetic system, assuming that the requirements an the magnetic field strength are kept constant. This advantage is due to the Joule heating load being transferred from the conventional wires to the ceramic ferrites that effect the field amplification.

A further understanding of the nature and advantages of the present invention may be realized by reference to the remaining portions of the specification and the drawings.

Fig. 1     is a schematic representation of a prior art electromagnetic levitation melt system;

Fig. 2     is an illustration of a simple magnetic circuit according to the prior art;

Fig. 3     is an illustration, not directly related to the invention but useful for the understanding the invention, the illustration being of a magnetic circuit in which a section of the magnetic core has been wrapped around a dielectric core of very high, real permittivity;

Fig. 4     is an illustration, not directly related to the invention but useful for the understanding the invention, the illustration being of a magnetic step-up transformer;

Fig. 5     is a graph, not directly related to the invention but useful for the understanding the invention, the illustration being of the apparent permeability versus the angular frequency for a specific system of conductors;

Fig. 6     is an illustration, not directly related to the invention but useful for the understanding the invention, the illustration being of a magnetic step-up transformer configured to function as a fluid pump;

Fig. 7     is an illustration of a quarter wave resonant amplifier in accordance with the present invention;

Fig. 8     is the structure illustrated in Fig. 7 with a small mmf introduced near the shorted end;

Fig. 9     is an illustration of a quarter wave resonant amplifier configured to function as a simple levitator;

Fig. 10    is an illustration of a quarter wave resonator for seawater pumping and propulsion in accordance with the present invention;

Fig. 11   is an illustration of a feed mechanism for the resonator shown in Fig. 20; and

Fig. 12   is an illustration of a conventional electromagnetic thruster for comparison purposes.

The concept of magnetic circuits is used with advantage in the design of magnets and electromagnetic machinery. In such applications it is common to draw an analogy between a DC electric circuit and an arrangement of permeable materials in the presence of a magnetic field source (e.g., a solenoid). This analogy draws an equivalency between the DC voltage source which provides an electromotive force, emf, and the magnetomotive force of the solenoid winding. Thus, in the same way as the voltage source drops voltage across series resistances in its path, the magnetomotive force is dropped across the series reluctances in its path. Therefore reluctance is given by the expression $R = l/(\mu A)$, where $\mu$ is the permeability of the material carrying the magnetic flux, $l$ is its length, and $A$ is its cross-sectional area. Clearly an air gap (i.e., $\mu = \mu_0$) in series with a highly permeable core (i.e., $\mu \gg \mu_0$) has a significant effect on the overall reluctance of the circuit.

The traditional analogy between reluctance and resistance has been found to be inappropriate since it only works when the circuit is viewed in the limit as frequency goes to zero. To obtain the proper analogy the full duality between dielectric materials and magnetic materials must be invoked. This was originally effected in 1892 by Oliver Heaviside, *Electric Papers,* chap. XXX, sec. III, 441 (2nd ed. 1970). Heaviside conceived of a quantity analogous to electric current which he termed magnetic current. He defined the magnetic current as $G = fH + [\mu/(4\pi)][\partial H/\partial t]$. The second term on the right hand side of the equation is the conventional rate of change of the magnetic induction. Heaviside introduced the first term: the magnetic conduction current which can only exist if magnetic conductivity $f$ exists.

Although magnetic conductivity has never been observed to exist at zero frequency (i.e., DC), it is clear that in the presence of alternating currents it can exist. In particular, by letting the magnetic field be harmonic with a time dependence $e^{j\omega t}$, and identifying $\mu = \mu'$ and $\omega\mu'' = 4\pi f$, then the magnetic current equation can be rearranged into:

$$4\pi G = \omega\mu''H + j\omega\mu'H = j\omega H(\mu' - j\mu'')$$

It is also clear that a material with a complex permeability containing a lossy or imaginary part, $\mu''$, behaves as if it were carrying a magnetic conduction current.

Although Heaviside assumed the magnetic conductivity to be small, the present derivation assumes that it is very large. It is assumed that the magnetic conductivity is large enough to overwhelm the properties of the material in the same way that a metal's conductivity overwhelms its dielectric properties. It is then straightforward to show that such a material, driven by a harmonic magnetomotive force, can be made to display many characteristics analogous to those found in AC electric circuit elements. Therefore just as the electric inductance-capacitance-resistance ($LRC$) circuit is the foundation of a vast array of practical applications, a new magnetic inductance-magnetic capacitance-magnetic resistance ($L_m R_m C_m$) circuit is proposed as the foundation for the present invention.

I. Dual Circuit Parameters

The prior art magnetic circuit of Fig. 2 consists of an alternating voltage source 1 supplying voltage $V$ connected across the terminals of a solenoid 2 of height $h_1$ with $N_1$ turns carrying the current $I_1$. Solenoid 2 is wound on a nonconducting permeable core 3 of complex permeability $\mu$, where $\mu$ is equivalent to $\mu' - j\mu''$, and where $\mu'$ is the real part of the complex magnetic permeability and $\mu''$ is the imaginary part. Permeable core 3 has a total length $l$, a cross-section radius $\rho$ and its two ends are parallel to each other but separated by a gap 4 of length $g$.

Solenoid 2 provides a magnetomotive force $mmf_1 = I_1 N_1$ which must equal the circuital line integral of the magnetic field throughout the whole flux path. Assuming no leakage into the surrounding space, the flux flowing through core 3 must traverse gap 4 unchanged. Therefore, if for simplicity we assume that the end faces of core 3 and gap 4 have the same radius as the cross-sectional radius of the core, the $B$-field in core 3 and gap 4 are equal (as would be demanded by the electromagnetic boundary condition on the normal $B$-field). Then

$$(1) \qquad mmf_1 = I_l N_l = \oint \vec{H} \cdot \vec{dl} = (B/\mu)l + (B/\mu_0)g$$

Multiplying the numerator and denominator of each term on the right hand side by the angular frequency $\omega$ and the complex number $j = (-1)^{\frac{1}{2}}$ and separating the core permeability into real and imaginary parts, equation 1 becomes:

$$(2) \quad mmf_1 = [(j\omega\mu'Hl + \omega\mu''Hl)/(j\omega\mu' + \omega\mu'')] +$$

$$[(j\omega\mu'Hg + \omega\mu''Hg)/(j\omega\mu_0)]$$

Now select the magnetic permeable material to have a natural or induced spin resonance at or just below the operating frequency, thus allowing $\mu''$ to be much greater than $\mu'$. Such materials exist in nature, with spin resonances conveniently ranging from the kHz (e.g., manganese zinc ferrites) into the MHz range (e.g., nickel zinc ferrites). A magnetic conductivity $\sigma_m = \omega\mu''$ is defined such that a magnetic conduction current density $J_m$ can be defined as $J_m = \sigma_m H$. Then equation 2 simplifies to:

$$(3) \quad mmf_1 = [(J_m l)/\sigma_m] + [(J_m g)/(j\omega\mu_0)] \quad (3)$$

Multiplying the numerators and denominators by the cross-sectional area of core 3 (i.e., $\pi\rho^2$), rearranging terms and identifying the total magnetic current as $I_m = J_m \pi\rho^2$, yields:

$$(4) \quad mmf_1 = I_m/G_m + I_m/(j\omega C_m) \quad (4)$$

where $G_m$ is the total dual magnetic conductance which is the reciprocal of the total dual magnetic resistance,

$$(5) \quad G_m = (\sigma_m \pi\rho^2)/l = 1/R_m \quad (5)$$

and $C_m$ is the dual magnetic capacitance of the gap,

$$(6) \quad C_m = (\mu_0 \pi\rho^2)/g \quad (6)$$

For these circuit elements to be useful they must be designable. A variety of values must be obtainable by geometry and material choice to allow a required circuit operation to take place in a given application. Clearly, the core material and geometry can be used to obtain a variety of magnetic resistances. Magnetic materials exist ranging from very lossy to virtually lossless. However, it is not clear from the above that given a choice for the magnetic resistance, the magnetic capacitance is truly designable.

This doubt arises because if the gap is as described, submerged in air, the capacitance term has a minimum limit. That is, when the two faces of the gap are allowed to become arbitrarily separated, we can only lower the total capacitance to the series sum of the self capacitance of each face to infinity, which is of the order of $\pi\mu_0\rho$. Trying to depress the capacitance below this limit by narrowing down the gap faces (reducing the cross-sectional area locally) will not work because the flux will still leak out over a larger area. However, by taking advantage of the eddy currents induced in conductors by the alternating magnetic field in the gap, it is possible to depress the magnetic capacitance below this value. For example, if a metal sheet with a hole smaller than the cross-sectional area of the core is inserted into the gap, the magnetic flux will be forced to flow through this smaller area by the eddy currents induced in the sheet. This effect is exploited in the present invention, for example by immersing the gap in a conducting fluid. Using this technique, small magnetic capacitances can be obtained. Large capacitances are not difficult to achieve since the gap can be made arbitrarily small.

All that is missing from the desired $L_m R_m C_m$ circuit is the magnetic inductance. This is derived as follows.

The changing magnetic flux inside core 3 will induce a circulating electric field inside the core and in the surrounding space. By Maxwell's equations, this field is driven by a circuital electromotive force (*emf*) so that:

$$(7) \quad emf = \oint \vec{E}_{induced} \cdot dl = -j\omega \int \vec{B} \cdot d\vec{a}$$

Since all quantities are harmonic in time, the changing electric field then constitutes a changing electric displacement flux so that there is an induced back *mmf* due to:

$$(8) \quad mmf = \oint \vec{H} \cdot \vec{dl} = j\omega \int \vec{D} \cdot \vec{da} = j\omega \int \vec{E}_{induced} \cdot \vec{da}$$

This back *mmf* has an internal component due to the displacement flux crossing the inside of core 3 (which can have a substantial dielectric constant ranging from 10 to $10^4$) and an external component from the total flux in the surrounding space. Assuming that the frequency of operation is to be in the MHz range, the core choice would be a nickel zinc type of ferrite with a natural spin resonance in the MHz range and a dielectric relaxation in the kHz range. In this case, the relative permittivity of core 3 would be of the order of 10, minimizing the internal contribution. Whatever the choice of the materials it is clear that this back *mmf* of equation 8 is entirely equivalent to the back *emf* that wires experience in the presence of alternating currents due to self inductance. In other words, a core of high imaginary permeability, carrying an alternating magnetic current, also sees a magnetic inductance.

To maximize this term, consider the configuration of Fig. 3 where a section of a magnetic core 10 has been wrapped around a dielectric core 11 of very high, real permittivity. In effect, magnetic core 10 becomes a dual solenoid of $n_1$ turns, internal radius $r_1$ and length $h_m$.

The electric field inside the solenoid is given by the total electromotive force $n_1 I_m$ dropped across the length $l_m$ of dielectric core 11:

$$(9) \quad E = (n_1 I_m)\,/l_m$$

The alternating displacement vector is then:

$$(10) \quad D = (\varepsilon n_1 I_m)/l_m$$

Leading to a total back *mm*f accumulated over the $n_1$ turns of:

$$(11) \quad mmf_{ind} = n_1 \cdot j\omega[(\varepsilon n_1 I_m)/l_m]\pi r_1^{\,2}$$

where we identify the magnetic inductance as $L_m = (\varepsilon n_1^2 \pi r_1^2)/l_m$. The value of this inductance is clearly controlled by the material and geometry chosen for the dielectric core. Therefore, the magnetic circuit of Fig. 3 is the desired $L_m R_m C_m$ circuit and it is resonant, per the equation:

$$(12) \quad mmf = I_m R_m - [j/(\omega C_m)]I_m + j\omega L_m I_m$$

where all inductive terms, including the self, are lumped into the $L_m$. Solving for the total magnetic current:

$$(13) \quad I_m = (I_1 N_1)/[R_m - j/(\omega C_m) + j\omega L_m] \tag{13}$$

The effect of this magnetic current on the driving voltage source can be deduced as follows. Assume that the voltage source-solenoid combination has negligible circuit capacitance, then the voltage supplied by source 1 must be dropped across the ohmic resistance of the solenoid wire and the opposing back emf of the solenoid's inductance. The latter is a result of equation 7. For $N_1$ turns of wire the total induced voltage is:

$$V_{ind} = N_1\{-j\omega B\pi\rho^2\} = N_1\{-j\omega(\mu'-j\mu'')H\pi\rho^2\} \cong N_1\{-\omega\mu''H\pi\rho^2\}$$

so that:

$$(14) \quad V_{ind} = -N_1 I_m \tag{14}$$

Together, equations 13 and 14 give the relationship between the magnetic dual circuit elements and the source voltage:

$$(15) \qquad V_1 = I_1\{R_{wire} + [N_1{}^2/(R_m - j/(\omega C_m) + j\omega L_m)]\} \qquad (15)$$

II. Methods for the Amplification of Magnetic Fields

1. The Resonant Amplifier

The magnetic $L_m R_m C_m$ circuit defined by equation 13 can be utilized as a resonant magnetomotance amplifier analogous to resonant electric LRC circuits. In conventional LRC circuits it is known that if the inductive term and the capacitive term are made equal to each other, the electric current in the circuit is only limited by the small resistance of the wire. The flow of this large current through the reactances of the-inductor and capacitor can develop a large voltage. The requirement for voltage amplification is that the reactances of the inductor and capacitor be greater than the resistance of the wire (in other words, that the Q of the circuit be large). The same principle applies in the case of the dual magnetic resonant circuit.

As an example of a dual magnetic resonant circuit, consider the arrangement of Fig. 3 where $l$, the total length of core 10, is $\lambda/71$, and where $\lambda = 2\pi c/\omega$. Let $l$ be as small as possible, on the order of $l \cong 3h_m + n_1 2\pi r_1$. Let $r_1$, the internal radius of the dual solenoid, equal $10\rho$.

If $h_m = n_1 2\rho$, then by winding both sides of magnetic core 10 around dielectric core 11, $l_m$ can be made to be less than or equal to $2h_m$.

And we have $l = 69n_1\rho$, which implies that $\rho = \lambda/4899n_1$.

Now, the ratio between $\omega L_m$ and $R_m$ is

$$(16) \qquad Q_m = [(\omega n_1{}^2 \varepsilon \pi r_1{}^2)/2h_m][(\omega\mu''\pi\rho^2)/l]$$

$$= (\omega^2 \varepsilon_0 \mu_0 n_1{}^2 \pi^2 \mu_r'' \varepsilon_r 100\rho^4)/(2n_1{}^2 138\rho^2)$$

$$= 141.1[(\mu_r'' \varepsilon_r \rho^2)/\lambda^2]$$

With $l = \lambda/71$ the magnetic $Q_m$ becomes:

$$(17) \qquad Q_m = 5.93 \times 10^{-6} [ (\mu_r'' \varepsilon_r)/n_1{}^2] \qquad (17)$$

Finally, if we assume for simplicity only one turn of the dual solenoid (i.e., $n_1 = 1$) and if the relative permeability of core 10 is of the order of 5000 and the relative permittivity of dielectric core 11 is also the same (e.g., barium titanate ceramics), then $Q_m = 147$. In other words:

$$(18) \qquad \omega L_m = 147 R_m \text{ which at resonance must also equal } 1/(\omega C_m). \qquad (18)$$

The condition for resonance is then:

$$(19) \qquad g/(\omega\mu_0 \pi\rho^2) = 147[l/(\omega\mu_r'' \mu_0 \pi\rho^2)]$$

So that,

$$(20) \qquad g \cong 0.0294 l \cong 2\rho$$

Therefore a magnetic circuit with the design parameters given above will resonate when gap 4 is of the order of the diameter of magnetic core 10, with a $Q_m$ of 147. $Q_m$ is the magnetic field amplification factor. This is proven as follows.

By the continuity of normal $B$, neglecting fringing, the flux inside magnetic core 10 must continue inside gap 4. That is:

$$(21) \qquad -j\mu'' H_{core}\pi\rho^2 = \mu_0 H_{gap}\pi\rho^2 \text{ or } H_{gap} = -j\mu_r'' H_{core} \qquad (21)$$

Since at resonance the whole magnetomotive force drops across the $R_m$ term,

$$(22) \qquad H_{core} = (I_l N_1)/l = (I_l N_1)/33.7g \qquad (22)$$

And equation 21 becomes

$$(23) \qquad H_{gap} = -j147[ (I_l N_1)/g] \qquad (23)$$

If instead of this resonant magnetically conducting core a conventional core of real permeability and with no resonance had been used in the configuration suggested in Fig. 2, it is well known that all the *mmf* supplied by the current would be dropped across the gap. Thus, in conventional arrangements the magnetic field produced by the current $I_1$ in a gap of size $g$ is:

$$(24) \qquad H_{conventional} = (I_l N_1)/g \qquad (24)$$

Therefore, an amplification of a factor of $Q_m$ has been accomplished by the disclosed invention. The current through the wire solenoid has not been increased. The increased magnetic field power density comes from an increased electric field power density at the supplying voltage source since the voltage is higher than that required to flow $I_1$ through the wire resistance, according to equation 15.

Clearly, larger values of permeability, permittivity and the total length of the magnetic circuit relative to the free space wavelength all increase the $Q_m$ amplification factor proportionately. However, to insure resonance as $Q_m$ is increased, the magnetic capacitance must be made correspondingly smaller. In electric circuits there is a limit to this process since as two capacitor plates are separated, the circuit capacitance does not go to zero but tends to the limit of one half of the self capacitance between each plate and infinity. In the magnetic circuits of the present invention, however, it is possible to go below this limit by using conducting fluids.

## 2. Magnetomotance Step-Up Transformer

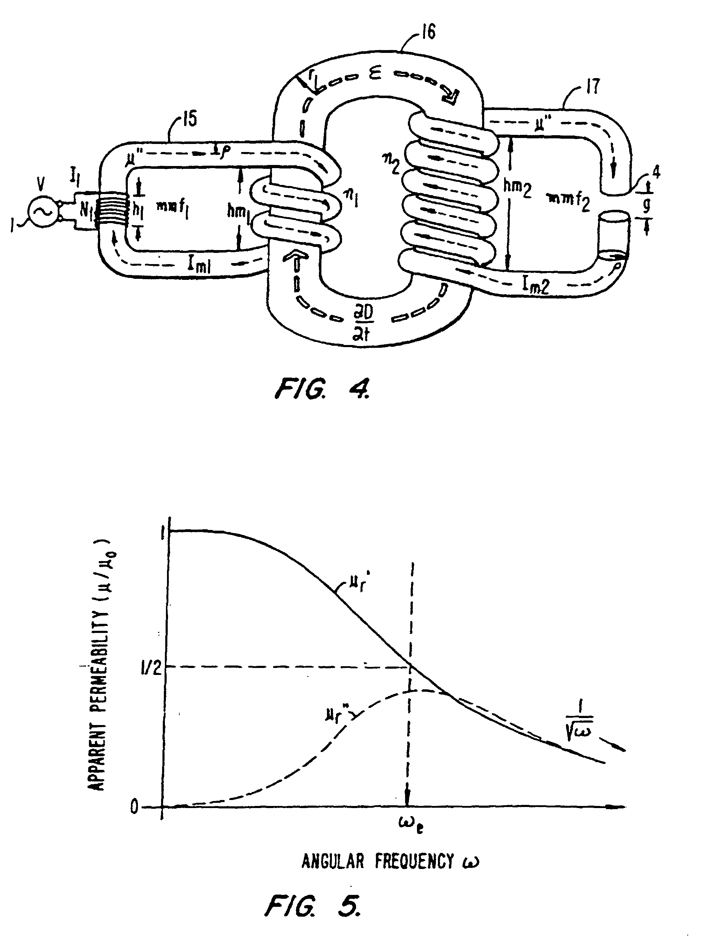

The second example of the amplification of magnetic fields parallels the amplification of voltages in step-up transformers. Consider the magnetic circuit of Fig. 4. Voltage source 1 is driving an electric current $I_1$ through the solenoid which constitutes a magnetomotive force $mmf_1 = I_1 N_1$ driving a magnetic current $I_{m1}$ in a first magnetically conducting core 15. Core 15 is assumed to form a closed circuit and to be wound in $n_1$ turns around a dielectric toroid 16 of cross-sectional radius $r_l$ and permittivity $\varepsilon$. It is assumed that in first core 15 the $\omega L_m$ term is greater than its $R_m$ term and dominates the behavior. A second magnetically conducting core 17 is wound $n_2$ turns around toroid 16 and left open at a gap 4 of size $g$.

It has already been shown by equation 10 that the dielectric displacement inside toroid 16 due to the flowing $I_{m1}$ is $D = (\varepsilon n_1 I_{m1})/I_m$. This displacement vector alternating through the toroid's cross-sectional area inside the dual solenoid made by second magnetic core 17 induces, by equation 11, a magnetomotive force of $mmf_2 = n_2 \cdot j\omega[(\varepsilon n_1 I_{m1})/I_m]\pi r_1^2$ on the second solenoid. If the capacitive term of the gap in the second core can be made to dominate the behavior, then all this $mmf_2$ will be dropped across gap 4. Recognizing that for the first core being dominated by $\omega L_m$ means that $mmf_1 = n_1 \cdot j\omega[(\varepsilon n_1 I_{m1})/I_m]\pi r_1^2$:

$$(25) \qquad H_{gap} = mmf_2/g = [n_2/n_1]\,[mmf_1/g] = [n_2/n_1][(I_1 N_1)/g]$$

$$= [n_2/n_1]H_{conventional}$$

Again, the magnetic field inside the gap has been made greater than could be accomplished with the same current in a conventional arrangement. This time the amplification factor is the turns ratio $n_2/n_1$.

The success of this step-up scheme for amplification lies in the ability to make the dual reactance of the magnetic capacitance component dominate the circuit of the second permeable core. To accomplish this, the term $C_m$

must be made as small as possible. As previously discussed, in a free space environment this is impossible because the lower limit of $C_m$ is of the order of $\pi\mu_0\rho$. To prove this, note that the capacitive reactance is of the order $1/(\omega\pi\mu_0\rho)$ whereas the inductive is $\omega L_m = (\omega\varepsilon n_2^2\pi r_1^2)I_m$. Letting $l_m = 2h_{m2} = 4\rho n_2$ and $r_1 = 10\rho$ as before and defining $P$ as the ratio of the capacitive reactance to the inductive, then:

$$(26) \qquad 1/(\omega C_m) = P\omega L_m \text{ or } P = [1/(\omega\pi\mu_0\rho)][l_m/(\omega\varepsilon n_2^2\pi r_1^2)]$$

$$= (4\rho n_2)/(\omega^2\mu_0\varepsilon_0\varepsilon_r n_2^2\pi^2 100\rho^3) \qquad (26)$$

which, using the design parameters from section II[1] described above, reduces to:

$$(27) \qquad P_{freespace} = 0.98/n_2 \qquad (27)$$

Since $n_2$ is greater than 1, it is clear that in free space we cannot meet the requirement of $P > 1$, and the capacitive term will not dominate. However, if the gap is immersed inside a conducting fluid the magnetic flux in the gap will induce an electromotive force that will drive volumetric eddy currents in the fluid.

In such an arrangement the driving *emf* on the order of $I_m$ works against an impedance equal to the sum of the resistance through the fluid plus the self-inductance of the circulating current. Defining the self-inductance of the circulating current as $L_{eddy}$, then:

$$(28) \qquad I_{eddy} \cong I_m/(R_{eddy} + j\omega L_{eddy}) \qquad (28)$$

And this $I_{eddy}$ constitutes the back *mmf* on the magnetic circuit. If the fluid conductivity is high enough, the current is inductance limited and $I_{eddy} \cong I_m/(j\omega L_{eddy})$. Adding this term to the other back *mmf*'s in equation 12 gives:

$$(29) \qquad mmf = I_m R_m - [j/(\omega C_m)]I_m + j\omega L_m I_m - [j/(\omega L_{eddy})]I_m \qquad (29)$$

From equation 29 it is clear that the eddy current term in the conducting fluid is in phase with, and therefore increases, the magnetic capacitive reactance. In fact, we can combine the two terms into one and define the magnetic capacitive reactance $1/(\omega C_m)$ to be of the order of $1/(\omega\mu(\omega)\rho)$. Here $\mu(\omega)$ is the effective permeability of the conducting medium as a function of frequency.

For a system of conductors (such as laminated magnetic metal cores) of characteristic dimension t, $\mu(\omega)$ has the behavior shown in Fig. 5. Fig. 5 illustrates that when the frequency is such that the characteristic dimension is of the order of two skin depths, the real permeability has dropped to half the free space value and an imaginary component arises of approximately the same magnitude. This frequency is called the eddy frequency, $f_e$, which is equal to $\omega_e/(2\pi)$. As the frequency increases both μ' and μ'' drop as $1/\omega^{\frac{1}{2}}$. Therefore, if the frequency is significantly greater than the eddy frequency, $\mu(\omega) = \mu_0(\omega_e/\omega)^{\frac{1}{2}}$.

If the conducting fluid is sea water (i.e., conductivity approximately 5 mhos/meter where 1 mhos = 1 ohm$^{-1}$) and the characteristic dimension g is equal to 2 meters, this eddy frequency is 0.04 MHz. If the circuit operates at 50 MHz then $\mu(\omega)$ is equal to $0.028\,\mu_0$, which increases the magnetic capacitive reactance by a factor of 35. This makes the ratio $P$ of the capacitive reactance to the inductive reactance of equations 26 and 27 of the order of 3.5 for a secondary core of $n_2 = 10$ turns. In this instance 78% of the $mmf_2$ is dropped across the gap or 7.8 $mmf_1$. If $n_2 = 20$ turns, the ratio $P$ is 1.75 and 64% of the $mmf_2$ is dropped across the gap or 12.7 $mmf_1$. Therefore it is straightforward to obtain an amplification of one order of magnitude using the step-up principle in sea water.

3. Step-Up Transformer Pump

As discussed above, if the gap in the step-up transformer configuration is immersed in a conducting fluid, strong eddy currents are induced in the fluid. Due to the reaction of the currents in the fluid to the amplified magnetic field, the fluid in the gap is expelled radially outwards from the gap. This outward force can be used in a variety of applications.

The simplest application of the outward force on the fluid within the gap is to use the step-up transformer configuration as a magnetic fluid stirrer. For this application the step-up transformer does not have to be modified, the gap is simply immersed in the fluid to be stirred.

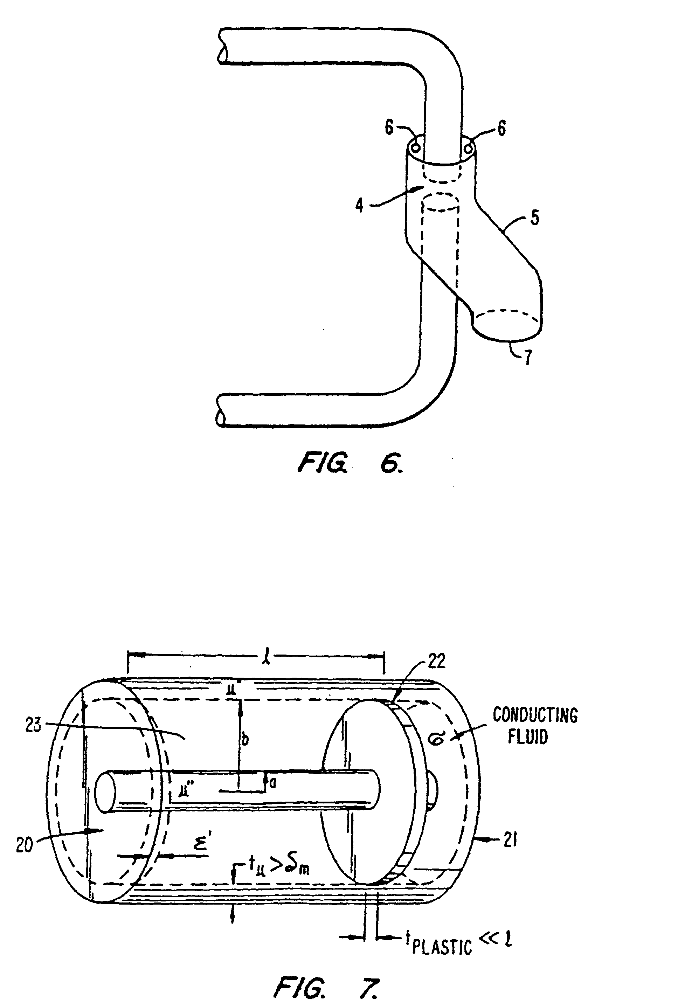

A more useful application is to channel the force exerted on the fluid within the gap, thereby creating a fluid pump. One method of channeling the fluid flow is shown in Fig. 6. Surrounding gap 4 is a fluid redirection skirt 5 containing both a plurality of fluid intake ports 6 and a fluid exhaust nozzle 7. Skirt 5 is made of a material which is essentially transparent to the electromagnetic waves; plastic in the preferred embodiment. As the fluid is expelled outwards from the gap, the skirt redirects the outward flow through exhaust nozzle 7, generating a propulsive force.

## 4. Resonant Magnetic Step-Up Transformer

This method is a combination of the resonant amplifier and the magnetomotance step-up transformer described above. In this case both the primary and secondary cores are tuned to resonance through the suitable arrangement of all dual capacitances and inductances. The stepped up *mmf* then gets multiplied by the resonance amplification to obtain a total magnetic field amplification in the gap that is as a minimum, the product of the two amplifications disclosed in the preceding two sections (greater than 2 orders of magnitude) and as a maximum could be a quantity comparable to the voltage amplification obtained in a Tesla coil (six orders of magnitude) provided magnetic materials with extremely high magnetic conductivity are used.

## 5. Quarter Wave Resonant Amplifier

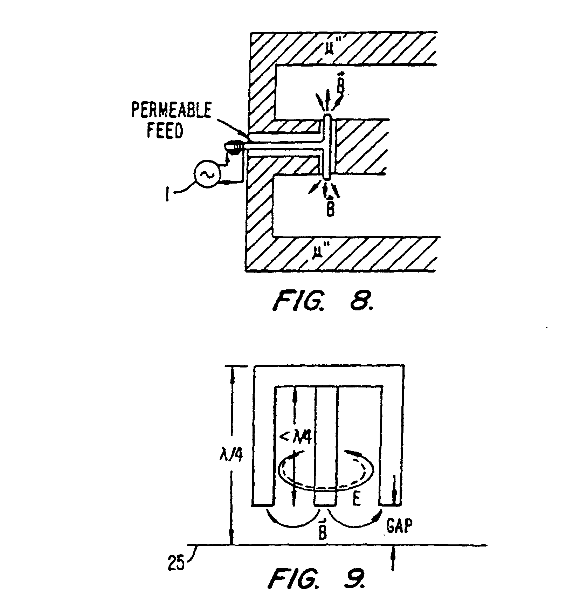

Fig. 7 is an example of a quarter wave resonant amplifier.. It consists of a dual coaxial transmission line constructed from a lossy permeable material, shorted at end 20 by the same material. End 21 is left open and sealed against surrounding external conducting fluid by a plastic barrier 22. Since a conducting fluid has been shown to enhance the magnetic capacitive reactance term, the open end 21 of the dual transmission line so constructed can truly approach the ideal definition of a magnetic open circuit. When a small mmf is introduced into this structure near shorted end 20, as suggested by the connection scheme of Fig. 8, a standing wave will be set up inside with a minimum of magnetic field strength at shorted end 20 and a maximum at open end 21 in the fluid. This constitutes a dual quarter wave resonant line section.

To derive the equations of the dual coaxial line assume the line is filled with a low loss dielectric 23. Because the walls of the coaxial waveguide are made of a lossy magnetic material, the tangential magnetic field tends to vanish on their surface. As a result, the structure supports a TEM mode in which the magnetic field is purely radial (normal to the coaxial surfaces) and the electric field circulates tangential to the same. The magnetic skin depth inside the lossy magnetic material is:

$$(30) \qquad \delta_m = [2/(\omega\varepsilon\sigma_m)]^{\frac{1}{2}}$$

The magnetic impedance (which has the units of a conventional admittance) of the transmission line is then:

$$(31) \quad \zeta = [(R_m + j\omega L_m) / (j\omega C_m) ]^{\frac{1}{2}} = [L_m/C_m]^{\frac{1}{2}}$$

$$= [\varepsilon_0/\mu_0]^{\frac{1}{2}} [\varepsilon_r]^{\frac{1}{2}} [1/(2\pi)] \ln(b/a)$$

where the $R_m$, $L_m$ and $C_m$ are per unit length.

For a resonant quarter wave section of line a small "voltage" input 1 near shorted end 20 appears greatly amplified at open end 21 by the factor:

$$(32) \qquad Q_m = (2\zeta)/[R_m(\lambda/4)]$$

If the thickness of the magnetic conductors is greater than the magnetic skin depth, the magnetic resistance per unit length is just:

$$(33) \qquad R_m = [1/(\sigma_m\delta_m)] \{[1/(2\pi a)] + [1/ (2\pi b) ]\}$$

$$= [ \varepsilon/ (2\mu'') ]^{\frac{1}{2}} \{[1/(2\pi a)] + [1/(2\pi b)]\}$$

In a typical embodiment filling dielectric 23 would be a ceramic of high dielectric strength in order to withstand the amplified electric field inside the transmission line and its relative permittivity would be chosen to be 200. With this dielectric and a frequency of operation of 25MHz, the quarter wave length, $l$, is 0.21 meters. If the imaginary part of the relative permeability of the magnetic conductor is 5000 (either natural or enhanced through ferromagnetic resonance in the presence of an applied DC magnetic field) and the real part of its permittivity is on the order of 10, then the magnetic skin depth, $\delta_m$, is 0.012 meters. For an inner coax cylinder's outer radius, $a$, of 0.0381 meters and an outer coaxial shield's inner radius, $b$, of 0.105 meters, then the magnetic resistance per unit length is 0.000478 mhos/meter, while the transmission line magnetic impedance is 0.00606 mhos, yielding an amplification factor of $Q_m$=120.8.

## 6. Quarter Wave Resonator Levitation System

The quarter wave resonant amplifier can be reconfigured to act as a simple levitator. In this configuration the resonator of Fig. 7 does not contain barrier 22. Instead of immersing the device in a conducting fluid, an electrically conducting ground plane 25 is placed at end 21 as shown in Fig. 9. In this configuration, the resonator would float approximately a quarter wave above the ground plane. Even though there is a gap, the energy in the resonator tends to be trapped inside the device. It cannot leak out because the electric field inside the device is circular and tangential to the ground plane. Such a wave cannot propagate over the ground.

## 7. Magnetic Material Requirements

Regardless of the configuration of the magnetic amplifier, the magnetic materials employed in the amplifier must be sufficiently lossy. It is imperative that the imaginary part of the complex permeability be much greater than 1 at the magnetic amplifier's frequency of operation so that the lossy permeable core will behave as the magnetic equivalent of a metallic conductor. Generally this requires that if the frequency of operation is to be in the MHz range, $\mu''$ is of the order of 1000 to 5000 times $\mu_0$. For other frequencies of operation, the product of the imaginary permeability and the frequency must be kept approximately constant. Therefore, if the frequency of operation is to be in the kHz range, $\mu''$ is of the order of $10^6$ to $5 \times 10^6$ times $\mu_0$ while if the frequency of operation is to be in the GHz range, $\mu''$ is of the order of 1 to 5 times $\mu_0$.

The characteristics of magnetic materials are well known and therefore it is simply a matter of selecting an appropriate material for a specific application, appropriateness being based on the material's permeability for the intended frequency of operation, its mechanical characteristics, its availability in the desired sizes, its ability to withstand the intended environment, and its cost.

In general, the peak imaginary permeability is of the order of one half to one times the initial permeability. Therefore, manganese zinc ferrite classes III and IV with initial permeabilities on the order of 3000 to 20,000 and 2000 to 5000, respectively, as well as class VI nickel zinc ferrites with an initial permeability of 1000, are excellent candidates for a variety of magnetic amplifier applications. In the GHz range, cobalt zinc ferrites have suitable properties. It is also possible to achieve a fully controlled high lossy permeability by applying an external DC magnetic field to the magnetic core, this technique of controlling a material's permeability being well known in the art.

## Quarter Wave Resonator for Seawater Pumping and Propulsion at 25 MHz

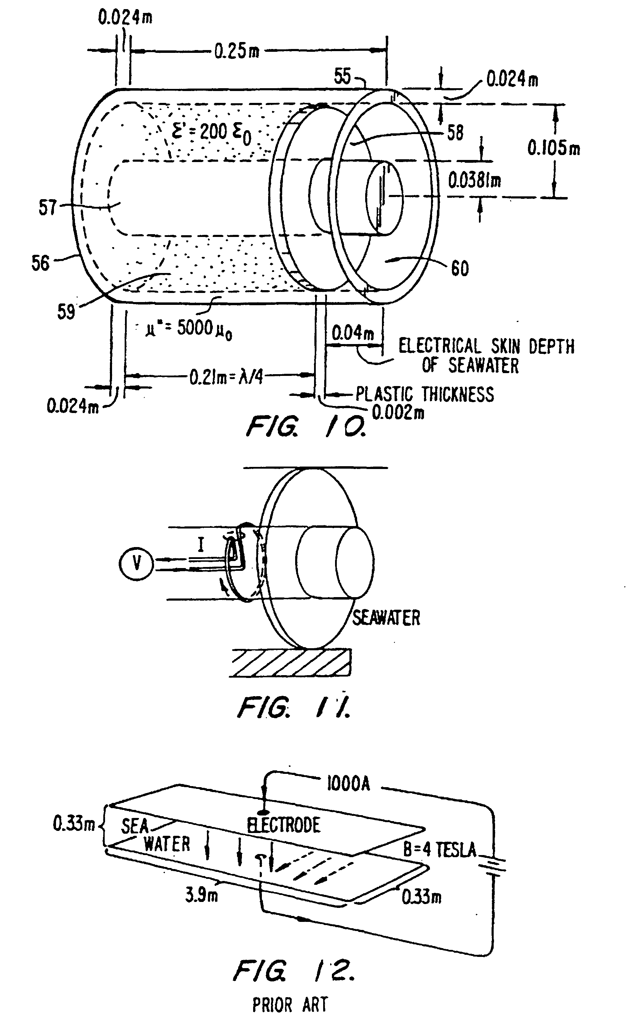

Fig. 10 is an illustration of a quarter wave resonant amplifier. This embodiment consists of a magnetic coaxial transmission line 0.25 meters long in which the outer cylinder 55 has a wall thickness of 0.024 meters. Outer cylinder 55 has a shorted end 56. Cylinder 55 and end 56 are both made of a lossy permeable material with $\mu''$ equal to $5000\mu_0$. The inner radius, b, of cylinder 55 is 0.105 meters.

The inner coax cylinder 57 has an outer radius, a, of 0.0381 meters. Plastic barrier 58 seals the open end of the transmission line and is approximately 0.002 meters thick and mounted 0.21 meters (i.e., $\lambda/4$) from shorted end 56. Volume 59 is filled with a dielectric and volume 60 is filled with seawater. In this embodiment the dielectric is a ceramic filled foam, such as barium strontium titanate which has an $\varepsilon'$ of 2800, at 7% density. Volume 60 can also be filled with alternating ceramic disks and foam spacers. For example, 20 ceramic disks each with a thickness of 0.000744 meters separated by 20 foam spacers of 0.0097 meters thickness can be used.

In order to set-up a standing wave inside the resonator, a small $mmf$ is introduced into the structure, for example using a one turn coil near the seawater end as shown in Fig. 11. In this case the input $mmf_1$ is equal to $I$ and the amplified $mmf_2$ is equal to 120.8 $I$ (the amplification factor, $Q_m$, of 120.8 was previously derived in Section II[5]). Therefore at the open end:

$$H(r) = (120.8 I)/r$$

with a pressure distribution equal to:

$$(\mu_0/2)H^2 = (\mu_0/2)\,(120.8)^2(I^2/r^2)$$

Thus the force at the mouth of the waveguide is: $(\mu_0/2)\,(120.8)^2 I^2 \int (1/r^2)\,2\pi r\,dr = \mu_0(120.8)^2\pi I^2\,\ln(b/a)$ so

$$\text{force} = 0.0576\,I^2\ \text{Newtons}$$

The area of the mouth of the waveguide is:

$$\pi(0.105^2 - 0.0381^2) = 0.03\ \text{m}^2$$

Therefore the mean pressure drop is:

$$(0.0576/0.03)\,I^2 = 1.92\,I^2\ \text{Pascals}$$

This pressure drop occurs over the depth of fluid required for the $B$ field to go to zero due to the eddies. This distance is on the order of three skin depths, or 0.12 meters. Therefore the resonator can produce a pressure drop of 1.92 $I^2$ Pascals over 0.12 meters of fluid which is equivalent to $16I^2$ Pa/m.

The design of a conventional electromagnetic thruster is shown in Fig. 12. The dimensions of the thruster channel are 0.33 meters by 0.33 meters by 3.9 meters. The thruster uses 1000 A to produce 1333 N. The pressure drop is therefore $1333/0.33^2$ which equals $1.22 \times 10^4$ Pascals. Over a 3.9 meters length this is equivalent to $3.14 \times 10^3$ Pa/m. A length of 0.12 meters of electrode carries a current of 1000(0.12/3.9), or 30.77 A. Applying this current in the embodiment of the invention described above would yield $16(30.77)^2$ Pa/m, or $15.1 \times 10^3$ Pa/m. Thus the embodiment of the invention described above is approximately 5 times more efficient that the conventional thruster. Furthermore, the invention does not require a superconducting magnet to supply the $B$ field.

## Claims

1.  A resonant amplifier for the intensity of a magnetic field comprising:

    a source of an input AC magnetomotive force with a frequency $\omega/2\pi$,
    a magnetic coaxial transmission line comprising an outer cylinder (55) made of a first lossy permeable material, as defined by the magnitude of the imaginary part of the complex magnetic permeability related to the permeability of free space $\mu_0$ having regard to the operating frequency, and an inner cylinder (57) made of a second lossy permeable material, as defined by the magnitude of the imaginary part of the complex magnetic permeability related to the permeability of free space $\mu_0$ having regard to the operating frequency, said coaxial transmission line having a first end and a second end, wherein the imaginary part of the complex magnetic permeabilities of the outer cylinder (55) and of the inner cylinder (57) are sufficiently great at the operating frequency to cause said inner cylinder (57) to behave as a magnetic equivalent to a metallic conductor;
    an end plate (56) sealably coupled to said first end, said end plate made of a third lossy permeable material, as defined by the magnitude of the imaginary part of the complex magnetic permeability related to the permeability of free space $\mu_0$ having regard to the operating frequency, wherein said end plate shorts said coaxial transmission line;
    a barrier (58) sealably coupled to an inner wall of said outer cylinder and sealably coupled to an outer wall of said inner cylinder, said barrier located approximately a quarter wave ($\lambda/4$) away from said first end plate (56), where $\lambda = 2\pi c/\omega$ being the frequency of the applied input magnetomotive force and c being a speed of light, and wherein said barrier is substantially transparent to electromagnetic waves within said resonant amplifier;
    a dielectric filler (59) located between said outer and inner cylinders and between said end plate and said barrier, said dielectric filler having a high dielectric permittivity of the order of 200;
    a conducting fluid (60) located between said outer and inner cylinders and between said barrier and said second end.

2. The resonant amplifier of claim 1, wherein said first, second, and third lossy permeable materials are of substantially equivalent compositions.

3. The resonant amplifier of claim 1, wherein said conducting fluid (60) is seawater.

4. The resonant amplifier of claim 1, wherein said dielectric filler (59) is composed of a plurality of ceramic disks interspersed with a plurality of foam spacers.

5. The resonant amplifier of claim 1, wherein said dielectric filler (59) is a ceramic filled foam.

6. The resonant amplifier of claim 1, wherein said source of an input AC magnetomotive force is a one turn coil wound around said inner cylinder (57).

7. The resonant amplifier of claim 1, further comprising an AC voltage source connected to said one turn coil.

8. The resonant amplifier of claim 1, wherein the source of an input AC magnetomotive force is a rod made of a lossy permeable material as defined by the magnitude of the imaginary part of the complex magnetic permeability related to the permeability of free space $\mu_0$ having regard to the operating frequency, said rod being inserted into said dielectric filler (59) through a hole in said inner coax cylinder (57).

9. The resonant amplifier of claim 8, further comprising an AC voltage source connected to a solenoid wrapped around said rod.

10. The resonant amplifier of claim 1, wherein said barrier (58) is made of plastic.

11. The resonant amplifier of claim 2 , wherein the amount of amplification of said resonant amplifier is defined as $(2\zeta)$ $/[R_m(\lambda/4)]$, where $\zeta$ is approximately equivalent to $[\varepsilon_0/\mu_0]^{1/2}[\varepsilon_r]^{1/2}[1/(2\pi)]\ln(b/a)$ and $R_m$ is equivalent to $[\varepsilon/(2\mu")]^{1/2}$ $\{[1/(2\pi a)] + [1/(2\pi b)]\}$ and $\lambda$ is equivalent to $2\pi c/\omega$, wherein $\varepsilon$ is a complex dielectric constant of said first, second, and third lossy permeable materials, $\varepsilon_0$ is a permittivity of free space, $\mu_0$ is a permeability of free space, $\varepsilon_r$ is a relative permittivity of said dielectric filler, $\mu"$ is an imaginary part of a complex permeability of said first, second, and third lossy permeable materials, c is a speed of light, and $\omega$ is an angular frequency.

12. A method of pumping a conducting fluid using a resonant amplifier for the intensity of a magnetic field in accordance with any one of the preceding claims, the method comprising:

applying a magnetomotive force to said dielectric filler (59) located between said outer cylinder (55) made of a first lossy permeable material and said coaxial inner cylinder (57) made of a second lossy permeable material, said dielectric filler (59) also being located between said shorting plate (56) sealably coupled to said first end of said outer and inner cylinders and said barrier plate (58), said barrier plate (58) being located approximately a quarter wave away from said shorting end plate (56),

wherein said conducting fluid (60) located between said outer and inner cylinders and between said barrier plate and a second end of said outer and inner cylinders is subjected to a force at an open mouth of a waveguide formed at said second end of said outer and inner cylinders (55, 56).

**Patentansprüche**

1. Resonanzverstärker für die Intensität eines Magnetfeldes, umfassend:

eine Quelle für eine magnetomotorische AC-Eingangskraft mit einer Frequenz $\omega/2\pi$,
eine magnetische koaxiale Übertragungsleitung mit einem äußeren Zylinder (55), der hergestellt ist aus einem ersten mit Verlust behafteten, permeablen Material, wie durch die Größe des Imaginärteils der komplexen magnetischen Permeabilität bezogen auf die Permeabilität von freiem Raum $\mu_0$ unter Berücksichtigung der Betriebsfrequenz definiert, und einem inneren Zylinder (57), der hergestellt ist aus einem zweiten mit Verlust behafteten, permeablen Material, wie durch die Größe des Imaginärteils der komplexen magnetischen Permeabilität bezogen auf die Permeabilität von freiem Raum $\mu_0$ unter Berücksichtigung der Betriebsfrequenz definiert, wobei die koaxiale Übertragungsleitung ein erstes Ende und ein zweites Ende aufweist, wobei der Imaginärteil der komplexen magnetischen Permeabilitäten des äußeren Zylinders (55) und des inneren Zylinders (57) bei der Betriebsfrequenz ausreichend groß sind, um zu bewirken, dass sich der innere Zylinder (57) wie ein magnetisches Äquivalent für einen metallischen Leiter verhält;

eine Endplatte (56), die abdichtbar mit dem ersten Ende gekoppelt ist, wobei die Endplatte hergestellt ist aus einem dritten mit Verlust behafteten, permeablen Material, wie durch die Größe des Imaginärteils der komplexen magnetischen Permeabilität bezogen auf die Permeabilität von freiem Raum $\mu_0$ unter Berücksichtigung der Betriebsfrequenz definiert, wobei die Endplatte die koaxiale Übertragungsleitung kurzschließt;

eine Barriere (58), die abdichtbar mit einer Innenwand des äußeren Zylinders gekoppelt ist und abdichtbar mit einer äußeren Wand des inneren Zylinders gekoppelt ist, wobei die Barriere annähernd eine Viertel Wellenlänge ($\lambda/4$) von der ersten Endplatte (56) entfernt angeordnet ist, wobei $\lambda = 2\pi c/\omega$, $\omega/2\pi$ die Frequenz der angelegten magnetomotorischen Eingangskraft ist und c eine Lichtgeschwindigkeit ist, und wobei die Barriere für elektromagnetische Wellen innerhalb des Resonanzverstärkers im Wesentlichen transparent ist;

einen dielektrischen Füllstoff (59), der zwischen dem äußeren und dem inneren Zylinder und zwischen der Endplatte und der Barriere angeordnet ist, wobei der dielektrische Füllstoff eine hohe dielektrische Permittivität in der Größenordnung von 200 aufweist; und

ein leitendes Fluid (60), das zwischen dem äußeren und dem inneren Zylinder und zwischen der Barriere und dem zweiten Ende angeordnet ist.

2. Resonanzverstärker nach Anspruch 1, wobei das erste, das zweite und das dritte mit Verlust behaftete, permeable Material aus im Wesentlichen gleichwertigen Zusammensetzungen bestehen.

3. Resonanzverstärker nach Anspruch 1, wobei das leitfähige Fluid (60) Salzwasser ist.

4. Resonanzverstärker nach Anspruch 1, wobei der dielektrische Füllstoff (59) aus einer Vielzahl von keramischen Scheiben zusammengesetzt ist, die mit einer Vielzahl von Schaumabstandshaltern vermischt sind.

5. Resonanzverstärker nach Anspruch 1, wobei der dielektrische Füllstoff (59) ein keramisch gefüllter Schaum ist.

6. Resonanzverstärker nach Anspruch 1, wobei die Quelle einer magnetomotorischen AC-Eingangskraft eine Spule mit einer Windung ist, die um den inneren Zylinder (57) herumgewickelt ist.

7. Resonanzverstärker nach Anspruch 1, der ferner eine AC-Spannungsquelle umfasst, die mit der Spule mit einer Windung verbunden ist.

8. Resonanzverstärker nach Anspruch 1, wobei die Quelle einer magnetomotorischen AC-Eingangskraft ein Stab ist, der hergestellt ist aus einem mit Verlust behafteten, permeablen Material, wie durch die Größe des Imaginärteils der komplexen magnetischen Permeabilität bezogen auf die Permeabilität von freiem Raum $\mu_0$ unter Berücksichtigung der Betriebsfrequenz definiert, wobei der Stab in den dielektrischen Füllstoff (59) durch ein Loch in den inneren koaxialen Zylinder (57) eingesetzt ist.

9. Resonanzverstärker nach Anspruch 8, der ferner eine AC-Spannungsquelle umfasst, die mit einem Solenoid verbunden ist, das um den Stab herumgewickelt ist.

10. Resonanzverstärker nach Anspruch 1, wobei die Barriere (58) aus Kunststoff hergestellt ist.

11. Resonanzverstärker nach Anspruch 2, wobei der Betrag an Verstärkung des Resonanzverstärkers definiert ist als $(2\zeta)/[R_m(\lambda/4)]$, wobei $\zeta$ annähernd $[\varepsilon_0/\mu_0]^{1/2}[\varepsilon r]^{1/2}[1/(2\pi)]\ln(b/a)$ entspricht, und $R_m$ $[\varepsilon/(2\mu'')]^{1/2}\{[1/(2\pi a)] + [1/(2\pi b)]\}$ entspricht und $\lambda$ $2\pi c/\omega$ entspricht, wobei $\varepsilon$ eine komplexe Dielektrizitätskonstante des ersten, des zweiten und des dritten mit Verlust behafteten, permeablen Materials ist, $\varepsilon_0$ eine Permittivität von freiem Raum ist, $\mu_0$ eine Permeabilität von freiem Raum ist, $\varepsilon_r$ eine relative Permittivität des dielektrischen Füllstoffes ist, $\mu''$ ein Imaginärteil einer komplexen Permeabilität des ersten, des zweiten und des dritten mit Verlust behafteten, permeablen Materials ist, c eine Lichtgeschwindigkeit ist und $\omega$ eine Winkelfrequenz ist.

12. Verfahren zum Pumpen eines leitfähigen Fluides unter Verwendung eines Resonanzverstärkers für die Intensität eines Magnetfeldes nach einem der vorhergehenden Ansprüche, wobei das Verfahren umfasst:

Aufbringen einer magnetomotorischen Kraft auf den dielektrischen Füllstoff (59), der angeordnet ist zwischen dem äußeren Zylinder (55), der aus einem ersten mit Verlust behafteten, permeablen Material hergestellt ist,

**EP 0 887 816 B1**

und dem koaxialen inneren Zylinder (57), der aus einem zweiten, mit Verlust behafteten permeablen Material hergestellt ist, wobei der dielektrische Füllstoff (59) auch zwischen der Kurzschlussplatte (56), die abdichtbar mit dem ersten Ende des äußeren und des inneren Zylinders gekoppelt ist, und der Barrierenplatte (58) angeordnet ist, wobei die Barrierenplatte (58) annähernd eine Viertel Wellenlänge von der Kurzschlussendplatte (56) entfernt angeordnet ist, wobei das leitfähige Fluid (60), das zwischen dem äußeren und dem inneren Zylinder und zwischen der Barrierenplatte und einem zweiten Ende des äußeren und des inneren Zylinders angeordnet wird, einer Kraft an einer offenen Mündung eines Wellenleiters, die an dem zweiten Ende des äußeren und des inneren Zylinders (55, 56) ausgebildet ist, ausgesetzt wird.

**Revendications**

1. Amplificateur résonnant pour l'intensité d'un champ magnétique, comprenant :

   une source de force magnétomotrice d'entrée en courant alternatif avec une fréquence de $\omega/2\pi$, une ligne de transmission coaxiale magnétique comprenant un cylindre extérieur (55) réalisé en un premier matériau perméable à fortes pertes, défini par l'amplitude de la partie imaginaire de la perméabilité magnétique complexe relative à la perméabilité de l'espace libre $\mu0$ en regard de la fréquence opérationnelle, et un cylindre intérieur (57) réalisé en un deuxième matériau perméable à fortes pertes, défini par l'amplitude de la partie imaginaire de la perméabilité magnétique complexe relative à la perméabilité de l'espace libre $\mu0$ en regard de la fréquence opérationnelle, ladite ligne de transmission coaxiale ayant une première extrémité et une deuxième extrémité, dans lequel les parties imaginaires des perméabilités magnétiques complexes du cylindre extérieur (55) et du cylindre intérieur (57) sont suffisamment importantes à la fréquence opérationnelle pour amener ledit cylindre intérieur (57) à se comporter comme un équivalent magnétique à un conducteur métallique ;
   une plaque d'extrémité (56) couplée de manière étanche à ladite première extrémité, ladite plaque d'extrémité étant réalisée en un troisième matériau perméable à fortes pertes, défini par l'amplitude de la partie imaginaire de la perméabilité magnétique complexe relative à la perméabilité de l'espace libre $\mu0$ en regard de la fréquence opérationnelle, dans lequel ladite plaque d'extrémité court-circuite ladite ligne de transmission coaxiale ;
   une barrière (58) couplée de manière étanche à une paroi interne dudit cylindre extérieur et couplée de manière étanche à une paroi extérieure dudit cylindre intérieur, ladite barrière étant située approximativement à un quart d'onde ($\lambda/4$) de ladite première plaque d'extrémité (56), où $\lambda = 2\ \pi c/\omega$, $\omega/2\pi$ étant la fréquence de la force magnétomotrice d'entrée appliquée et c étant la vitesse de la lumière, et dans lequel ladite barrière est sensiblement transparente aux ondes électromagnétiques à l'intérieur dudit amplificateur résonnant ;
   un agent de remplissage diélectrique (59) placé entre lesdits cylindres extérieur et intérieur et entre ladite plaque d'extrémité et ladite barrière, ledit agent de remplissage diélectrique ayant une forte permittivité diélectrique, de l'ordre de 200 ;
   un fluide conducteur (60) placé entre lesdits cylindres extérieur et intérieur et entre ladite barrière et ladite deuxième extrémité.

2. Amplificateur résonnant selon la revendication 1, dans lequel lesdits premier, deuxième et troisième matériaux perméables à fortes pertes ont des compositions sensiblement équivalentes.

3. Amplificateur résonnant selon la revendication 1, dans lequel ledit fluide conducteur (60) est de l'eau de mer.

4. Amplificateur résonnant selon la revendication 1, dans lequel ledit agent de remplissage diélectrique (59) est composé d'une pluralité de disques en céramique alternant avec une pluralité d'entretoises en mousse.

5. Amplificateur résonnant selon la revendication 1, dans lequel ledit agent de remplissage diélectrique (59) est une mousse remplie de céramique.

6. Amplificateur résonnant selon la revendication 1, dans lequel ladite source d'une force magnétomotrice d'entrée en courant alternatif est un bobinage à une spire enroulé autour dudit cylindre intérieur (57).

7. Amplificateur résonnant selon la revendication 1, comprenant en outre une source de tension alternative connectée audit bobinage à une spire.

**8.** Amplificateur résonnant selon la revendication 1, dans lequel la source de force magnétomotrice d'entrée en courant alternatif est une tige réalisée en un matériau perméable à fortes pertes défini par l'amplitude de la partie imaginaire de la perméabilité magnétique complexe relative à la perméabilité de l'espace libre $\mu 0$ en regard de la fréquence opérationnelle, ladite tige étant insérée dans ledit agent de remplissage diélectrique (59) par l'intermédiaire d'un trou, dans ledit cylindre coaxial intérieur (57).

**9.** Amplificateur résonnant selon la revendication 8, comprenant en outre une source de courant alternatif connectée à une bobine de solénoïde enroulée autour de ladite tige.

**10.** Amplificateur résonnant selon la revendication 1, dans lequel ladite barrière (58) est réalisée en matière plastique.

**11.** Amplificateur résonnant selon la revendication 2, dans lequel la quantité d'amplification dudit amplificateur résonnant est définie par $(2\zeta) / [Rm(\lambda/4)]$, où $\zeta$ est approximativement équivalent à $[\varepsilon 0/\mu 0]^{1/2}\ [\varepsilon r]^{1/2}\ [1/(2\pi)]$ In $(b/a)$ et Rm est équivalent à $[\varepsilon/(2\mu'')]^{1/2}\ \{[1/(2\pi a)] + [1 / (2\pi b) ] \}$ et $\lambda$ est équivalent à $2\pi c/\omega$, où $\varepsilon$ est la constante diélectrique complexe desdits premier, deuxième et troisième matériaux perméables à fortes pertes, $\varepsilon 0$ est la permittivité de l'espace libre, $\mu 0$ est la perméabilité de l'espace libre, $\varepsilon r$ est la permittivité relative dudit agent de remplissage diélectrique, $\mu''$ est la partie imaginaire de la perméabilité complexe desdits premier, deuxième et troisième matériaux perméables à fortes pertes, c est la vitesse de la lumière, et $\omega$ est la fréquence angulaire.

**12.** Procédé de pcmpage d'un fluide conducteur en utilisant un amplificateur résonnant pour l'intensité d'un champ magnétique, selon l'une quelconque des revendications précédentes, le procédé comprenant :

l'application d'une force magnétomotrice audit agent de remplissage diélectrique (59) placé entre ledit cylindre extérieur (55) réalisé en un premier matériau perméable à fortes pertes et ledit cylindre intérieur coaxial (57). réalisé en un deuxième matériau perméable à fortes pertes, ledit agent de remplissage diélectrique (59) étant aussi placé entre ladite plaque de court-circuit (56) couplée de manière étanche à ladite première extrémité desdits cylindres extérieur et intérieur et ladite plaque de barrière (58), ladite plaque de barrière (58) étant placée approximativement à un quart d'onde dé ladite plaque d'extrémité de court-circuit (56), dans lequel ledit fluide conducteur (60) placé entre lesdits cylindres extérieur et intérieur et entre ladite plaque de barrière et une deuxième extrémité desdits cylindres extérieur et intérieur, est soumis à une force à une embouchure ouverte d'un guide d'onde formé au niveau de ladite deuxième extrémité desdits cylindres extérieur et intérieur (55, 56).

FIG. 1.  PRIOR ART

FIG. 2.  PRIOR ART

FIG. 3.

FIG. 4.

FIG. 5.

18

FIG. 6.

FIG. 7.

PERMEABLE
FEED

I

$\vec{B}$

$\mu'''$

$\mu'''$

$\vec{B}$

FIG. 8.

$\lambda/4$

$< \lambda/4$

E

$\vec{B}$

GAP

25

FIG. 9.

0.024m

0.25m

55

0.024m

$\varepsilon' = 200\,\varepsilon_0$

58

0.105m

0.0381m

57

56

60

59

$\mu'' = 5000\,\mu_0$

0.04m

ELECTRICAL SKIN DEPTH
OF SEAWATER

0.21m = λ/4

PLASTIC THICKNESS

0.024m

0.002m

FIG. 10.

V

I

SEAWATER

FIG. 11.

1000A

0.33m

SEA
WATER

ELECTRODE

B=4 TESLA

3.9m

0.33m

FIG. 12.

PRIOR ART

21